# EUROPÄISCHE PATENTANMELDUNG

(11) **EP 4 806 728 A1**
(43) Veröffentlichungstag der Anmeldung: **16.09.2026**
(21) Anmeldenummer: 26160490.4
(22) Anmeldetag: 24.02.2026
(51) Int. Cl.: B60R 16/02, H02G 3/22

(54) **VORRICHTUNG, BEFESTIGUNGSSYSTEM, FAHRZEUG UND VERFAHREN ZUM DURCHFÜHREN MINDESTENS EINER LEITUNG DURCH EINE ÖFFNUNG IN EINER WAND**

(30) Priorität: 10.03.2025 DE 102025109011
(71) Anmelder: MAN Truck & Bus SE, 80995 München (DE)
(72) Erfinder: JOCHUM, Christina, 80995 München (DE); Brandmeier, Martin, 80995 München (DE)

(57) **Zusammenfassung**

Die Erfindung betrifft eine Vorrichtung (10) zum Durchführen mindestens einer Leitung (102a, 102b) durch eine Öffnung (104) in einer Wand (106), ein Befestigungssystem, ein Fahrzeug und ein Verfahren zum Durchführen mindestens einer Leitung (102a, 102b) durch eine Öffnung (104) in einer Wand (106). Die Vorrichtung (10) weist einen Grundkörper (12) zur Anordnung an einer ersten Außenseite (106a) der Wand (106), einen Klemmkörper (14) zur Anordnung an einer zweiten Außenseite (106b) der Wand (106), eine Klemmeinrichtung (16) zum Verklemmen der Vorrichtung (10) an der Wand (106) in einer Montageposition der Vorrichtung (10) und mindestens eine Leitungsführungseinrichtung (18, 20) auf. Die zweite Außenseite (106b) ist der ersten Außenseite (106a) entgegengesetzt. Die Klemmeinrichtung (16) ist ausgebildet, den Klemmkörper (14) und den Grundkörper (12) relativ zueinander zu bewegen, um die Wand (106) zwischen dem Grundkörper (12) und dem Klemmkörper (14) zu verklemmen. Die, vorzugsweise als mindestens ein Hohlkörper ausgebildete, mindestens eine Leitungsführungseinrichtung (18, 20) weist einen Aufnahmeabschnitt (18a, 20a), vorzugsweise einen Einführabschnitt, auf, der auf einer dem Klemmkörper (14) abgewandten Seite (12a) des Grundkörpers (12) von dem Grundkörper (12) abragt. Die mindestens eine Leitungsführungseinrichtung (18, 20) weist ferner einen Durchführabschnitt (18b, 20b) auf, der ausgebildet ist, sich in der Montageposition der Vorrichtung (10) von dem Grundkörper (12) durch die Öffnung (104) zumindest bis zu dem Klemmkörper (14) zu erstrecken.

## Beschreibung

Die Erfindung betrifft eine Vorrichtung zum Durchführen mindestens einer Leitung durch eine Öffnung in einer Wand, ein Befestigungssystem, ein Fahrzeug und ein Verfahren zum Durchführen mindestens einer Leitung durch eine Öffnung in einer Wand.

Zur Leitungsdurchführung durch Öffnungen werden in der Praxis zur Vereinfachung der Montage und/oder zum Schutz der Leitungen und/oder zum Kabelmanagement, separate Einsätze als Leitungsdurchführungen eingesetzt.

In diesem Zusammenhang beschreibt das Dokument US 2010/0307817 A1 eine zweiteilige Durchführung, die in einer Öffnung in der Zugangs-Bodenplatte positioniert ist. Die Durchführung kann mittels eines Hebels in der Öffnung gesichert werden. Im zusammengebauten Zustand können Leitungen durch Öffnungen der Durchführung geführt werden.

Diese und andere bekannte Lösungen bergen den Nachteil, dass das Einführen der Leitung in die Durchführung und/oder das Durchführen der Leitung durch die Durchführung, insbesondere im Falle eines hochverbauten Montageraums, aufgrund der schlechten Zugänglichkeit relativ schwierig bewerkstelligbar ist.

Der Erfindung liegt die Aufgabe zugrunde, eine verbesserte Technik zum Durchführen mindestens einer Leitung durch eine Öffnung in einer Wand zu schaffen, die insbesondere eine vereinfachte Leitungseinführung und -durchführung ermöglicht.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten Aspekt wird eine Vorrichtung zum Durchführen mindestens einer Leitung durch eine Öffnung in einer Wand bereitgestellt.

Die Vorrichtung weist einen Grundkörper zur Anordnung und/oder zum Anliegen an einer ersten Außenseite der Wand, einen Klemmkörper zur Anordnung und/oder zum Anliegen an einer zweiten Außenseite der Wand, eine Klemmeinrichtung zum Verklemmen der Vorrichtung an der Wand in einer Montageposition der Vorrichtung und mindestens eine Leitungsführungseinrichtung auf.

Die zweite Außenseite ist der ersten Außenseite entgegengesetzt angeordnet.

Die Klemmeinrichtung ist ausgebildet, den Klemmkörper und den Grundkörper relativ zueinander zu bewegen (z. B. einen Abstand zwischen dem Klemmkörper und dem Grundkörper zu verkleinern), um die Wand zwischen dem Grundkörper und dem Klemmkörper zu verklemmen.

Die (z. B. als mindestens ein Hohlkörper und/oder zu der Klemmeinrichtung separat ausgebildete) mindestens eine Leitungsführungseinrichtung weist einen Aufnahmeabschnitt (z. B. einen Einführabschnitt) für die mindestens eine Leitung auf, der an einer dem Klemmkörper abgewandten Seite des Grundkörpers von dem Grundkörper (z. B. vorsprungartig) abstehend angeordnet ist. Die mindestens eine Leitungsführungseinrichtung weist ferner einen Durchführabschnitt für die mindestens eine Leitung auf, der ausgebildet ist (z. B. so dimensioniert und/oder so angeordnet ist), sich (z. B. wenigstens) in der Montageposition der Vorrichtung von dem Grundkörper durch die Öffnung zumindest bis zu dem Klemmkörper (z. B. einer dem Grundkörper zugewandten Außenseite des Klemmkörpers und/oder sowie über den Klemmkörper hinaus) zu erstrecken.

Ein Vorteil kann darin gesehen werden, dass ein Einfädeln und/oder Einführen der mindestens einen Leitung in den Aufnahmeabschnitt aufgrund des abstehenden Aufnahmeabschnitts erleichtert werden kann.

Darüber hinaus kann aufgrund der sich vom Grundkörper bis zumindest zum Klemmkörper erstreckenden mindestens einen Leitungsführungseinrichtung das Durchführen der mindestens eine Leitung erleichtert werden. Ein Blockieren und/oder Verkanten der mindestens einen Leitung in der Vorrichtung kann verhinderbar sein.

Darüber hinaus kann die mindestens eine Leitung durch die in das Bauteil integrierte Leitungsführungseinrichtung (z. B. das Röhrchen) geschützt werden.

Darüber hinaus kann die mindestens eine Leitung z. B. vor einem Aufscheuern geschützt werden.

Z. B. wenn eine höhere Leistung zum Betrieb von Komfortgeräten (Kaffeemaschine, Mikrowelle) im Fahrerhaus benötigt wird und ein zusätzliches Leistungskabel in die Kabine verlegt werden soll, kann eine Verlegung unterhalb der Kabine aus Packagesicht das Sinnvollste sein. Das Durchfädeln kann durch die erfindungsgemäße Lösung vereinfacht werden, da der Werker nur von einer Seite aus die Durchführung einfädeln und montieren kann, wobei die mindestens eine Leitung bereits fest mit dieser Vorrichtung (z. B. Durchführung) verbunden ist.

Der Aufnahmeabschnitt und der Grundkörper können einteilig oder zweiteilig zueinander ausgebildet sein.

Der Aufnahmeabschnitt kann z. B. über die dem Klemmkörper abgewandten Seite des Grundkörpers von dem Grundkörper vorstehen und/oder sich z. B. über die dem Klemmkörper abgewandten Seite des Grundkörpers hinaus erstrecken.

Optional ist der Grundkörper und/oder der Klemmkörper ausgebildet, in der Montageposition an einem die Öffnung umgebenden Wandbereich in der Montageposition angebracht zu sein und/oder (z. B. unmittelbar oder mittelbar) anzuliegen.

Optional ist die Vorrichtung in der Montageposition an der Wand verklemmt. Die Montageposition kann also die Endposition der Vorrichtung an der Wand und/oder eine in der Wand eingefädelte Position und/oder eine an der Wand verklemmte Position der Vorrichtung sein.

Bevorzugt ist die Leitung eine elektrische Leitung (z. B. ein Leistungskabel). Grundsätzlich kann die Vorrichtung aber auch dem Durchführen jeder anderen Leitung dienen, z. B. einer hydraulischen oder pneumatischen Leitung, etc.

Der Aufnahmeabschnitt kann zum Einführen der mindestens einen Leitung ausgebildet sein. Der Aufnahmeabschnitt kann z. B. eine Einführöffnung für die mindestens eine Leitung aufweisen. Der Aufnahmeabschnitt kann aber auch nur zur Aufnahme der zumindest einen Leitung ausgebildet sein (z. B. wenn der Grundkörper als Kunststoffspritzguss-Bauteil ausgeführt ist).

Der Durchführabschnitt kann z. B. eine Ausführöffnung für die mindestens eine Leitung aufweisen.

Optional ist die mindestens eine Leitungsführungseinrichtung zumindest abschnittsweise Röhrchen-förmig ausgebildet.

Optional ist der Grundkörper im Wesentlichen teller- und/oder scheibenförmig ausgebildet.

In einem Ausführungsbeispiel kann der Aufnahmeabschnitt einen entlang seiner Haupterstreckungsrichtung und/oder entlang seiner Mittelachse gekrümmten Verlauf aufweisen. Die Mittelachse kann z. B. eine Symmetrieachse und/oder eine Längsachse sein.

Alternativ oder ergänzend kann der Aufnahmeabschnitt eine Mittelachse aufweisen, die quer (z. B. im Wesentlichen orthogonal) und/oder windschief zu einer Mittelachse des Durchführabschnitts orientiert ist. Die Mittelachsen können z. B. jeweils eine Symmetrieachse und/oder eine Längsachse des jeweiligen Abschnitts sein.

In einem Ausführungsbeispiel kann der Klemmkörper mindestens eine Ausnehmung aufweisen, durch die sich der Durchführabschnitt (z. B. zumindest abschnittsweise und/oder teilweise) erstreckt, um den Klemmkörper relativ zum Grundkörper (z. B. mittels Formschluss) zu positionieren (z. B. zu zentrieren). Bevorzugt steht der Durchführabschnitt durch die mindestens eine Ausnehmung über den Klemmkörper (z. B. vorsprungartig) hinaus vor. Dadurch kann z. B. ein Herausführen der mindestens einen Leitung aus der Vorrichtung erleichtert werden.

Beispielsweise steht der Durchführabschnitt von einer dem Grundkörper abgewandten Seite des Klemmkörpers über den Klemmkörper hinaus vor und/oder von dem Klemmkörper ab. Bevorzugt ist der Durchführungsabschnitt nicht integral-einstückig mit dem Klemmkörper ausgebildet.

Es ist aber auch denkbar, dass die Leitungsführungseinrichtung und/oder der Aufnahmeabschnitt und/oder der Durchführabschnitt zweistückig mit dem Grundkörper ausgebildet ist. Beispielsweise ist denkbar, dass der Aufnahmeabschnitt (z. B. Einführabschnitt) und/oder der Durchführabschnitt ein Leitungsstück ist, das vorzugsweise durch einen Fertigungsvorgang mit dem Grundkörper verbunden wird. Darüber hinaus kann auch der Durchführabschnitt zweistückig mit dem Grundkörper und/oder mit dem Aufnahmeabschnitt ausgebildet sein.

Bevorzugt weist die mindestens eine Leitungsführungseinrichtung mehrere Leitungsführungseinrichtungen auf und die mindestens eine Ausnehmung mehrere Ausnehmungen auf, wobei sich jeweils eine der mehreren Leitungsführungseinrichtungen durch jeweils eine Ausnehmung erstreckt.

In einem Ausführungsbeispiel kann die mindestens eine Leitungsführungseinrichtung integral-einstückig mit dem Grundkörper ausgebildet sein.

Die mindestens eine Leitungsführungseinrichtung und der Grundkörper können z. B. in ein einziges Bauteil integriert und/oder vereinigt sein.

Die Leitungsführungseinrichtung kann zweistückig mit dem Klemmkörper ausgebildet.

Dies kann z. B. das Durchführen der Leitung weiter vereinfachen.

In einem Ausführungsbeispiel kann die Klemmeinrichtung eine zwischen dem Grundkörper und dem Klemmkörper wirkende (z. B. durch eine Durchgangsöffnung des Grundkörpers verlaufende) Schraubverbindung aufweisen, mittels der der Klemmkörper und der Grundkörper relativ zueinander bewegbar sind.

Denkbar ist z. B., dass die Schraubverbindung eine (z. B. Montage-)Schraube umfasst, die durch die Durchgangsöffnung des Grundkörpers verläuft und in ein Innengewinde des Klemmkörpers eingreift. Ein Schraubenkopf der Schraube kann z. B. formschlüssig an dem Grundkörper anliegen, sodass ein Einschrauben ein Versetzen des Klemmkörpers in Richtung des Grundkörpers bewirkt und ein Ausschrauben ein Versetzen des Klemmkörpers weg von dem Grundkörper bewirkt.

Grundsätzlich ist aber auch jede andere, zur relativen Bewegung und/oder zum relativen Versetzen des Klemmkörper und des Grundkörpers geeignete Verbindung denkbar, z. B. eine Bajonettverbindung.

In einem Ausführungsbeispiel kann die Klemmeinrichtung ein Bedienelement zum relativen Bewegen und/oder Versetzen des Grundkörpers und des Klemmkörpers (z. B. einen Schraubenkopf und/oder einen Handgriff) aufweisen, das auf der dem Klemmkörper abgewandten Seite des Grundkörpers angeordnet ist.

Beispielsweise sind das Bedienelement und Aufnahmeabschnitt also auf derselben Seite des Grundkörpers angeordnet.

In einem Ausführungsbeispiel kann die mindestens eine Leitungsführungseinrichtung mehrere (z. B. zwei) Leitungsführungseinrichtungen aufweisen.

Dies kann z. B. vorteilhaft sein, wenn die mindestens eine Leitung eine zu einem Pluspol führende Leitung sowie einem zu einem Minuspol führende Leitung umfasst.

Die Klemmeinrichtung kann (z. B. mittig und/oder zentral) zwischen den mehreren Leitungsführungseinrichtungen angeordnet sein.

Dadurch kann z. B. eine bessere Erreichbarkeit der Klemmeinrichtung und/oder vereinfachte Handhabung der Vorrichtung erreichbar sein.

Darüber hinaus ist denkbar, dass die Leitungsführungseinrichtungen (z. B. entlang ihrer Haupterstreckungsrichtungen) unterschiedlich gekrümmte und/oder in unterschiedliche Richtungen abstehende und/oder zueinander nicht-parallel ausgerichtete Aufnahmeabschnitte aufweisen.

In einem Ausführungsbeispiel kann der Grundkörper und/oder der Klemmkörper und/oder die mindestens eine Leitungsführungseinrichtung ein Kunststoffmaterial umfassen (z. B. aus dem Kunststoffmaterial bestehen) und/oder als Kunststoffspritz-Bauteil und/oder als 3-D-Druck-Bauteil ausgebildet sein.

Das Kunststoffmaterial und/oder Kunststoffspritz-Bauteil und/oder 3-D-Druck-Bauteil kann z. B. als elektrischer Isolator ausgebildet sein, was z. B. die Betriebssicherheit erhöhen kann.

Der bzw. die als Kunststoffspritz-Bauteil Grundkörper und/oder Klemmkörper und/oder mindestens eine Leitungsführungseinrichtung kann vorteilhaft mittels eines Kunststoff-Spritzverfahrens und/oder mittels Umspritzen an der mindestens einen Leitung angebracht sein.

Das Kunststoffmaterial und/oder das Kunststoffspritz-Bauteil können einen zweckmäßig geeigneten Kunststoff umfassen oder daraus bestehen, wie z. B. ein Thermoplast und/oder ein Elastomer und/oder einen Gummi. Bevorzugt ist das Material nicht elektrisch leitend.

In einem Ausführungsbeispiel kann der Aufnahmeabschnitt als ein (z. B. entlang seiner Mittelachse gekrümmter) Einführstutzen ausgebildet sein.

Dadurch kann ein Einführen der mindestens einen Leitung weiter vereinfacht werden, z. B. indem der Einführstutzen in Richtung einer vorbestimmten Montagerichtung weist.

Alternativ oder ergänzend kann der Aufnahmeabschnitt und/oder der Durchführabschnitt zumindest abschnittsweise schlauchförmig und/oder rohrförmig und/oder tüllenartig ausgebildet sein.

Alternativ oder ergänzend kann der Aufnahmeabschnitt (z. B. entlang seiner Haupterstreckungsrichtung gesehen) länger sein als der Durchführabschnitt (z. B. entlang seiner Haupterstreckungsrichtung gesehen).

Alternativ oder ergänzend kann der Klemmkörper in einer Blickrichtung auf eine dem Grundkörper abgewandte Seite knochenförmig und/oder X-förmig ausgebildet sein.

Aussparungen der Knochenform und/oder der X-Form können Positionierflächen für die mindestens eine Leitungsführungseinrichtung bilden.

Alternativ oder ergänzend kann die Klemmeinrichtung konfiguriert und/oder dimensioniert sein, sich in einer Montageposition der Vorrichtung an der Wand von dem Grundkörper durch die Öffnung zu dem Klemmkörper zu erstrecken.

Alternativ oder ergänzend kann eine maximale Außenabmessung des Grundkörpers und/oder des Klemmkörpers größer sein als eine maximale Innenabmessung der Öffnung, sodass der Grundkörper und/oder der Klemmkörper die Öffnung in der Montageposition zumindest abschnittsweise überdeckt.

Alternativ oder ergänzend kann der Aufnahmeabschnitt an der dem Klemmkörper abgewandten Seite des Grundkörpers von dem Grundkörper abragen.

In einem Ausführungsbeispiel kann die Vorrichtung mindestens ein (z. B. mehrere und/oder zwei) Dichtelemente aufweisen, das auf einer Seite des Grundkörpers angeordnet ist, die der Wand in der Montageposition der Vorrichtung zugewandt ist.

Gemäß einem zweiten Aspekt wird ein Befestigungssystem bereitgestellt. Das Befestigungssystem umfasst eine Vorrichtung wie hierin offenbart. Das Befestigungssystem umfasst ferner mindestens eine (z. B. elektrische oder hydraulische oder pneumatische) Leitung die sich durch die mindestens eine Leitungsführungseinrichtung erstreckt und/oder die Wand mit der Öffnung.

Der Grundkörper der Vorrichtung kann in der Montageposition der Vorrichtung an der ersten Außenseite der Wand angeordnet sein.

Der Klemmkörper kann in der Montageposition der Vorrichtung an der, der ersten Außenseite entgegengesetzten zweiten Außenseite der Wand angeordnet sein.

Die Klemmeinrichtung zum Verklemmen der Vorrichtung an der Wand in einer Montageposition kann sich in der Montageposition von dem Grundkörper durch die Öffnung zu dem Klemmkörper erstrecken und/oder ausgebildet sein, den Klemmkörper und den Grundkörper relativ zueinander zu bewegen, um die Wand zwischen dem Grundkörper und dem Klemmkörper zu verklemmen.

Die mindestens eine Leitungsführungseinrichtung kann den Aufnahmeabschnitt (z. B. den Einführabschnitt) aufweisen, der an einer dem Klemmkörper abgewandten Seite des Grundkörpers von dem Grundkörper (z. B. vorsprungartig) abstehend angeordnet ist.

Die mindestens eine Leitungsführungseinrichtung kann den Durchführabschnitt aufweisen, der sich in der Montageposition der Vorrichtung durch die Öffnung zumindest bis zu dem Klemmkörper erstreckt.

In einem Ausführungsbeispiel kann zumindest der Grundkörper und/oder die mindestens eine Leitungsführungseinrichtung an der mindestens einen Leitung befestigt sein (z. B. um die mindestens einen Leitung gespritzt) sein, bevorzugt mittels eines Kunststoffspritzgussverfahrens.

Gemäß einem dritten Aspekt wird ein Fahrzeug (z. B. ein Kraftfahrzeug und/oder ein Nutzfahrzeug) bereitgestellt. Das Fahrzeug weist eine Vorrichtung wie hierin offenbart oder ein Befestigungssystem wie hierin offenbart auf.

Bei dem Fahrzeug kann es sich um ein Kraftfahrzeug handeln, das zweckmäßig durch seine Bauart und Einrichtung insbesondere zur Beförderung von Personen, zum Transport von Gütern oder zum Ziehen von Anhängerfahrzeugen ausgelegt ist. Beispielsweise kann das Nutzfahrzeug z. B. ein Lastkraftwagen oder Omnibus sein.

Gemäß einem vierten Aspekt wird ein Verfahren zum Durchführen mindestens einer Leitung durch eine Öffnung in einer Wand bereitgestellt.

Das Verfahren weist ein Bereitstellen einer Vorrichtung wie hierin offenbart auf.

Das Verfahren weist ferner ein Anbringen der Vorrichtung an der mindestens einen Leitung auf.

Das Verfahren weist ein (z. B. anschließendes und/oder auf das Anbringen folgendes) Einhängen der an der mindestens einen Leitung angebrachten Vorrichtung in die Öffnung der Wand.

Das Einhängen kann z. B. ein Anbringen des Klemmkörpers an dem Grundkörper und ein Einführen der so vormontierten, und optional schräggestellten, Vorrichtung in die Öffnung umfassen.

Das Verfahren weist ferner ein (z. B. anschließendes und/oder auf das Einhängen folgendes) Verklemmen der Vorrichtung an der Wand auf.

Die kann z. B. den Vorteil bergen, dass das Anbringen der Vorrichtung an der mindestens einen Leitung nicht im, z. B. hochverbauten, Montageraum erfolgen muss, sondern die Vorrichtung an einer Position an der mindestens einen Leitung angebracht wird, an der die Vorrichtung besser zugänglich ist. Dadurch kann der Montageaufwand sinken.

In einem Ausführungsbeispiel kann das Anbringen der Vorrichtung an der mindestens einen Leitung ein Befestigen der Vorrichtung an der mindestens einen Leitung umfassen, wobei der Grundkörper und/oder der Klemmkörper und/oder die mindestens eine Leitungsführungseinrichtung (z. B. der Aufnahmeabschnitt und/oder der Durchführabschnitt) mittels Kunststoffspritzen an der mindestens einen Leitung ausgebildet und/oder befestigt werden.

Alternativ kann das Anbringen der Vorrichtung an der mindestens einen Leitung ein Führen der mindestens einen Leitung durch die mindestens eine Leitungsführungseinrichtung umfassen. Denkbar ist z. B., dass die mindestens eine Leitung in den Aufnahmeabschnitt eingeführt und durch den Durchführabschnitt hindurch und wieder aus der mindestens einen Leitungsführungseinrichtung hinaus geführt wird.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Befestigungssystems gemäß einem Ausführungsbeispiel der vorliegenden Offenbarung (Schnittdarstellung);
- Figur 2: eine schematische perspektivische Ansicht einer Vorrichtung gemäß einem weiteren Ausführungsbeispiel der vorliegenden Offenbarung (Explosionsdarstellung); und
- Figur 3: ein schematisches Ablaufdiagramm eines Verfahrens gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

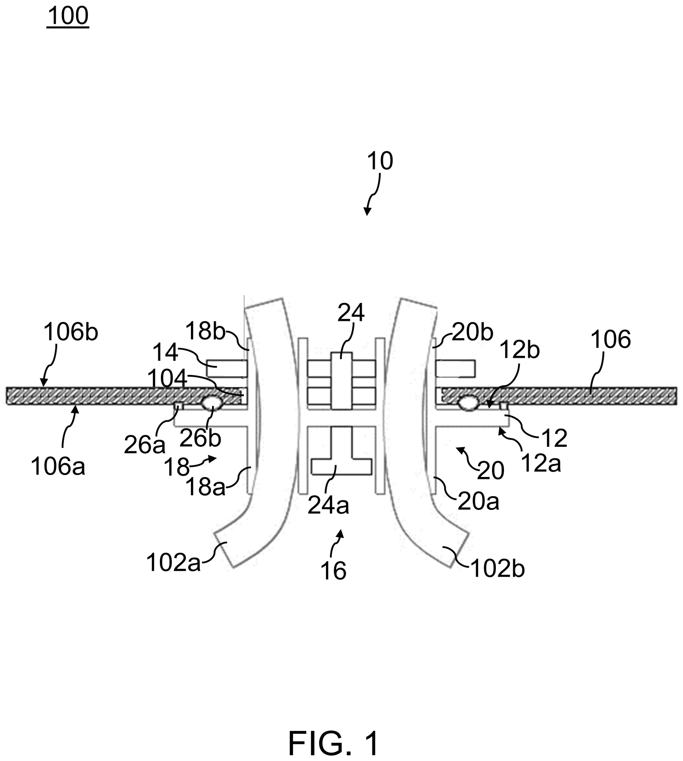

Figur 1 zeigt ein Befestigungssystem 100 gemäß einem Ausführungsbeispiel in einer Schnittansicht.

Das Befestigungssystem 100 umfasst eine Wand 106 mit einer Öffnung 104. In der Öffnung 104 ist eine Vorrichtung 10 zum Durchführen mindestens einer Leitung 102a, 102b durch die Öffnung 104 in der Wand 106 aufgenommen.

Im gezeigten Ausführungsbeispiel umfasst die mindestens eine Leitung 102a, 102b exemplarisch zwei Leitungen 102a, 102b.

Mittels der Vorrichtung 10 sind die Leitungen 102a, 102b von einer ersten Außenseite 106a der Wand durch die Öffnung 104 zu einer zweiten Außenseite 106b der Wand 106 geführt. Die zweite Außenseite 106b ist der ersten Außenseite 106a entgegengesetzt.

Dazu weist die Vorrichtung 10 mindestens eine Leitungsführungseinrichtung 18, 20. In dem hier gezeigten Ausführungsbeispiel weist die Vorrichtung 10 eine Leitungsführungseinrichtung 18, 20 pro Leitung 102a, 102b, also zwei Leitungsführungseinrichtungen 18, 20 auf.

Jede der als ein Hohlkörper ausgebildeten Leitungsführungseinrichtungen 18, 20 umfasst einen Aufnahmeabschnitt 18a, 20a, der als Einführabschnitt für die jeweilige Leitung 102a, 102b ausgebildet ist.

Der Aufnahmeabschnitt 18a, 20a ist an einer dem Klemmkörper 14 abgewandten Seite 12a des Grundkörpers 12 vorsprungartig abstehend angeordnet, ragt hier exemplarisch auf der Seite 12a von dem Grundkörper 12 ab.

Die mindestens eine Leitungsführungseinrichtung 18, 20 weist ferner einen Durchführabschnitt 18b, 20b für die jeweilige Leitung 102a, 102b auf, der sich in der Montageposition der Vorrichtung 10 von dem Grundkörper 12 durch die Öffnung 104 zumindest bis zu dem Klemmkörper 14 (und noch über den Klemmkörper 14 hinaus) erstreckt.

In diesem Ausführungsbeispiel steht der jeweilige Durchführabschnitt 18b, 20b von einer dem Grundkörper 12 abgewandten Seite des Klemmkörpers 14 über den Klemmkörper 14 hinaus von dem Klemmkörper 14 ab. Bevorzugt ist der Durchführungsabschnitt 18b, 20b nicht integral-einstückig mit dem Klemmkörper 14 ausgebildet.

Die jeweiligen Durchführungsabschnitte 18b, 20b definieren Hohlräume, durch welche die jeweilige Leitung 102a, 102b geführt ist.

Der jeweilige Aufnahmeabschnitt 18a, 20a und der jeweilige Durchführabschnitt 18b, 20b sind hier schlauchförmig und tüllenartig ausgebildet.

Zur Befestigung der Vorrichtung 10 in der Öffnung 104 ist eine Klemmeinrichtung 16 vorgesehen.

Mittels der Klemmeinrichtung 16 ist der Klemmkörper 14 und der Grundkörper 12 relativ zueinander bewegbar (z. B. ein Abstand zwischen dem Klemmkörper 14 und dem Grundkörper 12 veränderbar und/oder verkleinerbar), um die Wand 106 zwischen dem Grundkörper 12 und dem Klemmkörper 14 zu verklemmen.

In der Montageposition liegen der Klemmkörper 14 und der Grundkörper 12 (mittelbar über die später noch detailliert beschriebenen Dichtelemente 26a, 26b) an der jeweiligen Außenseite 106a, 106b der Wand 106 in einem die Öffnung 104 umgebenden Wandbereich an.

Die Klemmeinrichtung 16 umfasst in diesem Ausführungsbeispiel eine zwischen dem Grundkörper 12 und dem Klemmkörper 14 wirkende, durch eine Durchgangsöffnung des Grundkörpers 12 verlaufende Schraubverbindung 24, mittels der der Klemmkörper 14 und der Grundkörper 12 relativ zueinander bewegbar sind.

Exemplarisch umfasst die Schraubverbindung 24 eine Schraube, die durch die Durchgangsöffnung des Grundkörpers 12 verläuft und in ein Innengewinde des Klemmkörpers eingreift. Ein Schraubenkopf der Schraube kann z. B. formschlüssig an dem Grundkörper 12 anliegen, sodass ein Einschrauben ein Versetzen des Klemmkörpers 14 in Richtung des Grundkörpers 12 bewirkt und ein Ausschrauben ein Versetzen des Klemmkörpers 14 weg von dem Grundkörper 12 bewirkt.

Dadurch wird die Wand zwischen dem Grundkörper 12 und dem Klemmkörper 14 eingeklemmt und die Vorrichtung 10 so in der Öffnung 104 festgelegt.

Die Klemmeinrichtung 14 weist hier ein als Schraubenkopf ausgebildetes Bedienelement 24a auf, das auf der dem Klemmkörper 14 abgewandten Seite 12a des Grundkörpers 12 angeordnet ist, also auf derselben Seite 12a des Grundkörpers 12, wie der Aufnahmeabschnitt 18a, 20a.

Dadurch wird das Einführen der Leitungen 102a, 102b von derselben Seite bewerkstelligt, wie das Verklemmen.

Die Klemmeinrichtung 16 ist hier exemplarisch mittig zwischen den mehreren Leitungsführungseinrichtungen 18, 20 angeordnet.

Mittels der Klemmeinrichtung 16 kann auch ein Lösen der Vorrichtung 10 von der Wand 106 erfolgen, z. B. indem die Klemmeinrichtung 16 den Grundkörper 12 und den Klemmkörper 14 voneinander wegbewegt.

Auf einer Seite 12b des Grundkörpers 12, die der Wand 106 in der Montageposition der Vorrichtung 10 zugewandt ist, sind zwei Dichtelemente 26a, 26b angeordnet, die die Vorrichtung fluiddicht abdichten (z. B. gegen Spritzwasser).

Die Dichtelemente 26a, 26b sind hier exemplarisch als Dichtringe ausgebildet, wobei auch jedes andere, zweckmäßig zur Abdichtung geeignete Element möglich ist.

Die Leitungsführungseinrichtungen 18, 20 sind im gezeigten Ausführungsbeispiel integral-einstückig mit dem Grundkörper 12 ausgebildet. Dadurch sind die Leitungsführungseinrichtungen 18, 20 und der Grundkörper 12 in ein einziges Bauteil integriert und/oder vereinigt.

Der Klemmkörper 14 und der Grundkörper 12 sind dagegen zueinander zweiteilig ausgeführt.

Denkbar ist natürlich auch, dass die Leitungsführungseinrichtungen 18, 20 integral-einstückig mit dem Klemmkörper 14 ausgeführt sind (hier nicht dargestellt).

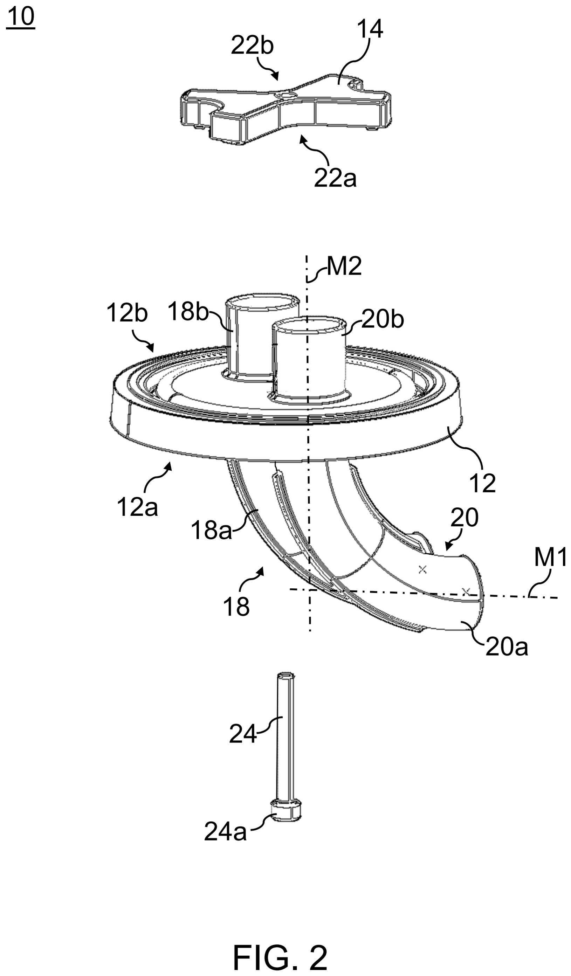

Figur 2 zeigt ein weiteres Ausführungsbeispiel einer Vorrichtung 10 in perspektivischer Explosionsdarstellung.

Die Aufnahmeabschnitte 18a, 20a sind als entlang ihrer Haupterstreckungsrichtung und entlang ihrer Mittelachsen M1 gekrümmte Einführstutzen ausgeformt, sodass die Aufnahmeabschnitte 18a, 20a jeweils quer zu den Mittelachsen M2 der Durchführabschnitte 18b, 20b orientiert sind. In Figur 2 ist der besseren Übersicht halber nur jeweils eine Mittelachse M1 des Aufnahmeabschnitts 20a und eine Mittelachse M2 des Durchführabschnitts 20b dargestellt.

Die Mittelachse M1 kann auch einen gekrümmten Verlauf aufweisen.

Darüber hinaus weist der Klemmkörper 14 in einer Blickrichtung auf eine dem Grundkörper 12 abgewandte Seite eine Knochenform und X-Form auf.

Dadurch definiert der Klemmkörper 14 Ausnehmungen 22a, 22b, durch die die Durchführabschnitte 18b, 20b in der Montageposition verlaufen. Dadurch wird der Klemmkörper 14 zum Grundkörper 12 positioniert.

Hier weist der Klemmkörper 14 exemplarisch zwei gegenüberliegende Ausnehmungen 22a, 22b auf, wobei sich jeweils eine der mehreren Leitungsführungseinrichtungen 18, 20 durch jeweils eine Ausnehmung 22a, 22b erstreckt.

Im hier gezeigten Ausführungsbeispiel ist ersichtlich, dass der Aufnahmeabschnitt 18a, 20a, entlang seiner Haupterstreckungsrichtung gesehen, länger ist als der Durchführabschnitt 18b, 20b entlang seiner Haupterstreckungsrichtung gesehen. Auf der dem Klemmkörper 14 abgewandten Seite 12a des Grundkörpers 12 stehen die Aufnahmeabschnitte 18a, 20a also weiter von dem Grundkörper 12 ab, als die Durchführungsabschnitte 18b, 20b auf der dem Klemmkörper 14 zugewandten Seite 12b des Grundkörpers 12.

Eine maximale Außenabmessung des Grundkörpers 12 und des Klemmkörpers 14 sind größer sein als eine maximale Innenabmessung der Öffnung 104, sodass der Grundkörper 12 und der Klemmkörper 14 die Öffnung 104 in der Montageposition zumindest abschnittsweise überdecken.

Im gezeigten Ausführungsbeispiel ist eine Zentrierung der Vorrichtung 10 gegenüber der Öffnung 104 daher überflüssig.

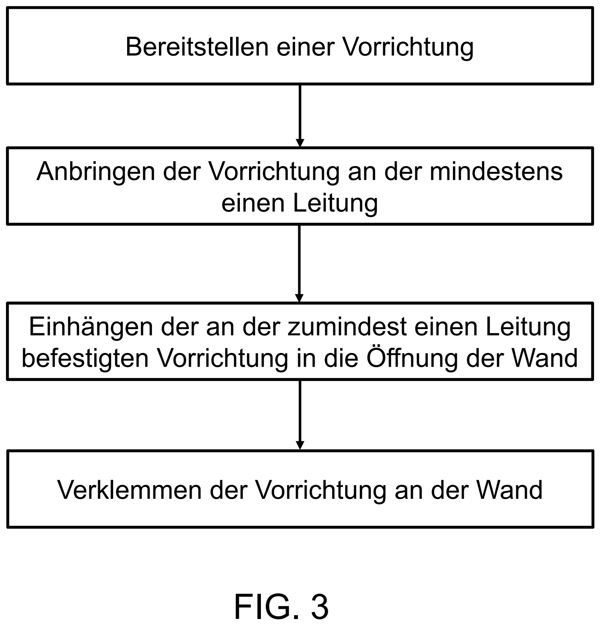

Figur 3 zeigt ein schematisches Flussdiagramm eines Verfahrens zum Durchführen mindestens einer Leitung 102a, 102b durch eine Öffnung 104 in einer Wand 106.

Das Verfahren weist ein Bereitstellen einer Vorrichtung 10 wie hierin offenbart auf.

Das Verfahren weist ferner ein Anbringen der Vorrichtung 10 an der mindestens einen Leitung 102a, 102b auf. Mit anderen Worten kann die hierin offenbart Vorrichtung 10 also bereits an der mindestens einen Leitung 102a, 102b vormontiert werden.

Anschließend erfolgt ein gemeinsames Einhängen der mindestens einen Leitung 102a, 102b und der an der mindestens einen Leitung 102a, 102b angebrachten Vorrichtung 10 in die Öffnung 104 der Wand 106.

Mit anderen Worten wird die mindestens eine Leitung 102a, 102b gemeinsam mit der an ihr angebrachten Vorrichtung 10 im Block in die Öffnung der Wand eingehängt.

Anschließend erfolgt ein Verklemmen der Vorrichtung 10 an der Wand 106.

Das Anbringen der Vorrichtung 10 an der mindestens einen Leitung 102a, 102b kann auf wenigstens zwei Arten erfolgen.

Einerseits ist denkbar, dass die Vorrichtung 10 an der mindestens einen Leitung 102a, 102b angebracht wird, indem die mindestens einen Leitung 102a, 102b vor dem Einhängen in die Öffnung 104 durch das mindestens eine Leitungsführungseinrichtung 18, 20 geführt wird. Denkbar ist z. B., dass die mindestens eine Leitung 102a, 102b in den Aufnahmeabschnitt 18a, 20a eingeführt und durch den Durchführabschnitt 18b, 20b hindurch und wieder aus der mindestens einen Leitungsführungseinrichtung 18, 20 hinausgeführt wird.

Andererseits kann die Vorrichtung 10 auch an der mindestens einen Leitung 102a, 102b angebracht werden, indem der Grundkörper 12 und/oder der Klemmkörper 14 und/oder die mindestens eine Leitungsführungseinrichtung 18, 20 z. B. mittels Kunststoffspritzen an der mindestens einen Leitung 102a, 102b ausgebildet werden.

Dann besteht der Grundkörper 12 und die mindestens eine Leitungsführungseinrichtung 18, 20 aus einem Kunststoffmaterial, um z. B. eine elektrische Isolierung zu realisieren.

Als Herstellverfahren eignet sich z. B. Kunststoffspritzen oder als 3-D-Drucken.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Insbesondere sind auch die Merkmale der Unteransprüche unabhängig von sämtlichen Merkmalen des unabhängigen Anspruchs 1 offenbart.

### Bezugszeichenliste

- 10: Vorrichtung
- 12: Grundkörper
- 12a: dem Klemmkörper abgewandte Seite des Grundkörpers
- 12b: dem Klemmkörper zugewandte Seite des Grundkörpers
- 14: Klemmkörper
- 16: Klemmeinrichtung
- 18: erste Leitungsführungseinrichtung
- 18a: Aufnahmeabschnitt der ersten Leitungsführungseinrichtung
- 18b: Durchführabschnitt der ersten Leitungsführungseinrichtung
- 20: Leitungsführungseinrichtung
- 20a: Aufnahmeabschnitt der zweiten Leitungsführungseinrichtung
- 20b: Durchführabschnitt der zweiten Leitungsführungseinrichtung
- 22a,b: Ausnehmungen des Klemmkörpers
- 24: Schraubverbindung
- 24a: Bedienelement
- 26a: Dichtelement
- 26b: Dichtelement
- 100: Befestigungssystem
- 102a,b: Leitungen
- 104: Öffnung
- 106: Wand
- 106a: erste Außenseite der Wand
- 106b: zweite Außenseite der Wand
- M1: Mittelachse des Aufnahmeabschnitts
- M2: Mittelachse des Durchführabschnitts

## Patentansprüche

1. Vorrichtung (10) zum Durchführen mindestens einer Leitung (102a, 102b) durch eine Öffnung (104) in einer Wand (106), aufweisend:
einen Grundkörper (12) zur Anordnung an einer ersten Außenseite (106a) der Wand (106);
einen Klemmkörper (14) zur Anordnung an einer zweiten Außenseite (106b) der Wand (106), die der ersten Außenseite (106a) entgegengesetzt ist; und
eine Klemmeinrichtung (16) zum Verklemmen der Vorrichtung (10) an der Wand (106) in einer Montageposition der Vorrichtung (10), wobei die Klemmeinrichtung (16) ausgebildet ist, den Klemmkörper (14) und den Grundkörper (12) relativ zueinander zu bewegen, um die Wand (106) zwischen dem Grundkörper (12) und dem Klemmkörper (14) zu verklemmen,
**gekennzeichnet durch**
mindestens eine Leitungsführungseinrichtung die dem Klemmkörper abgewandten Seite des Grundkörpers von dem Grundkörper (18, 20), vorzugsweise mindestens einen Hohlkörper, aufweisend:
einen Aufnahmeabschnitt (18a, 20a), vorzugsweise einen Einführabschnitt, der an einer dem Klemmkörper (14) abgewandten Seite (12a) des Grundkörpers (12) abstehend angeordnet ist; und
einen Durchführabschnitt (18b, 20b), der ausgebildet ist, sich in der Montageposition der Vorrichtung (10) von dem Grundkörper (12) durch die Öffnung (104) zumindest bis zu dem Klemmkörper (14) zu erstrecken.

2. Vorrichtung (10) nach Anspruch 1, wobei der Aufnahmeabschnitt (18a, 20a) einen entlang seiner Haupterstreckungsrichtung gekrümmten Verlauf aufweist und/oder der Aufnahmeabschnitt (18a, 20a) eine Mittelachse (M1) aufweist, die quer, vorzugsweise im Wesentlichen orthogonal, und/oder windschief zu einer Mittelachse (M2) des Durchführabschnitts (18b, 20b) orientiert ist.

3. Vorrichtung (10) nach einem der vorhergehenden Ansprüche, wobei der Klemmkörper (14) mindestens eine Ausnehmung (22a, 22b) aufweist, durch die sich der Durchführabschnitt (18b, 20b) erstreckt, um den Klemmkörper (14) relativ zum Grundkörper (12) zu positionieren, wobei vorzugsweise der Durchführabschnitt (18b, 20b) durch die mindestens eine Ausnehmung (22a, 22b) über den Klemmkörper (14) hinaus vorsteht.

4. Vorrichtung (10) nach einem der vorhergehenden Ansprüche, wobei die mindestens eine Leitungsführungseinrichtung (18, 20) integral-einstückig mit dem Grundkörper (12) ausgebildet ist.

5. Vorrichtung (10) nach einem der vorhergehenden Ansprüche, wobei die Klemmeinrichtung (16) eine zwischen dem Grundkörper (12) und dem Klemmkörper (14) wirkende, vorzugsweise durch eine Durchgangsöffnung des Grundkörpers (12) verlaufende, Schraubverbindung (24) aufweist, mittels der der Klemmkörper (14) und der Grundkörper (12) relativ zueinander bewegbar sind.

6. Vorrichtung (10) nach einem der vorhergehenden Ansprüche, wobei die Klemmeinrichtung (16) ein Bedienelement (24a) zum relativen Bewegen des Grundkörpers (12) und des Klemmkörpers (14), vorzugsweise einen Schraubenkopf und/oder einen Handgriff, aufweist, das auf der dem Klemmkörper (14) abgewandten Seite (12a) des Grundkörpers (12) angeordnet ist.

7. Vorrichtung (10) nach einem der vorhergehenden Ansprüche, wobei die mindestens eine Leitungsführungseinrichtung (18, 20) mehrere, vorzugsweise zwei, Leitungsführungseinrichtungen e (18, 20) aufweist, wobei vorzugsweise die Klemmeinrichtung (16), vorzugsweise mittig, zwischen den mehreren Leitungsführungseinrichtungen (18, 20) angeordnet ist und/oder die mehreren Leitungsführungseinrichtungen (18, 20) unterschiedlich gekrümmte und/oder zueinander nicht-parallel ausgerichtete Aufnahmeabschnitte (18a, 20a) aufweisen.

8. Vorrichtung (10) nach einem der vorhergehenden Ansprüche, wobei der Grundkörper (12) und/oder der Klemmkörper (14) und/oder die mindestens eine Leitungsführungseinrichtung (18, 20) ein Kunststoffmaterial, vorzugsweise ein Thermoplast und/oder ein Elastomer und/oder einen Gummi, umfassen und/oder als Kunststoffspritz-Bauteil und/oder als 3-D-Druck-Bauteil ausgebildet ist.

9. Vorrichtung (10) nach einem der vorhergehenden Ansprüche, wobei
der Aufnahmeabschnitt (18a, 20a) als ein, vorzugsweise gekrümmter, Einführstutzen ausgebildet ist; und/oder
der Aufnahmeabschnitt (18a, 20a) und/oder der Durchführabschnitt (18b, 20b) zumindest abschnittsweise schlauchförmig und/oder rohrförmig und/oder tüllenartig ausgebildet ist; und/oder
der Aufnahmeabschnitt (18a, 20a) länger ist als der Durchführabschnitt (18b, 20b); und/oder
der Klemmkörper (14) in einer Blickrichtung auf eine dem Grundkörper (12) abgewandte Seite knochenförmig und/oder X-förmig ausgebildet ist; und/oder
die Klemmeinrichtung (16) konfiguriert und/oder dimensioniert ist, sich in einer Montageposition der Vorrichtung (10) an der Wand (106) von dem Grundkörper (12) durch die Öffnung (104) zu dem Klemmkörper (14) zu erstrecken; und/oder
der Aufnahmeabschnitt (18a, 20a) an der dem Klemmkörper (14) abgewandten Seite (12a) des Grundkörpers (12) von dem Grundkörper (12) abragt; und/oder
eine maximale Außenabmessung des Grundkörpers (12) und/oder des Klemmkörpers (14) größer ist als eine maximale Innenabmessung der Öffnung (104), sodass der Grundkörper (12) und/oder der Klemmkörper (14) die Öffnung (104) in der Montageposition zumindest abschnittsweise überdeckt.

10. Vorrichtung (10) nach einem der vorhergehenden Ansprüche, aufweisend mindestens ein, vorzugsweise mehrere, Dichtelement (26a, 26b), das auf einer Seite (12b) des Grundkörpers (12) angeordnet ist, die der Wand (106) in der Montageposition der Vorrichtung (10) zugewandt ist.

11. Befestigungssystem (100), umfassend:
eine Vorrichtung (10) nach einem der vorhergehenden Ansprüche; und
mindestens eine, vorzugsweise elektrische oder hydraulische oder pneumatische, Leitung die sich durch die mindestens eine Leitungsführungseinrichtung (18, 20) erstreckt; und
vorzugsweise die Wand (106) mit der Öffnung (104).

12. Befestigungssystem (100) nach Anspruch 11, wobei zumindest der Grundkörper (12) und/oder die mindestens eine Leitungsführungseinrichtung (18, 20) an der mindestens einen Leitung (102a, 102b) befestigt ist, vorzugsweise umspritzt ist.

13. Fahrzeug, vorzugsweise Kraftfahrzeug und/oder Nutzfahrzeug, aufweisend eine Vorrichtung (10) nach einem der Ansprüche 1 bis 10 oder ein Befestigungssystem (100) nach einem der Ansprüche 11 bis 12.

14. Verfahren zum Durchführen mindestens einer Leitung (102a, 102b) durch eine Öffnung (104) in einer Wand (106), aufweisend:
Bereitstellen einer Vorrichtung (10) nach einem der Ansprüche 1 bis 10;
Anbringen der Vorrichtung (10) an der mindestens einen Leitung (102a, 102b);
Einhängen der an der mindestens einen Leitung (102a, 102b) angebrachten Vorrichtung (10) in die Öffnung (104) der Wand (106); und
Verklemmen der Vorrichtung (10) an der Wand (106).

15. Verfahren nach Anspruch 14, wobei das Anbringen der Vorrichtung (10) an der mindestens einen Leitung (102a, 102b) umfasst:
ein Befestigen der Vorrichtung (10) an der mindestens einen Leitung (102a, 102b), wobei der Grundkörper (12) und/oder der Klemmkörper (14) und/oder die mindestens eine Leitungsführungseinrichtung (18, 20) mittels Kunststoffspritzen an der mindestens einen Leitung (102a, 102b) ausgebildet und/oder befestigt werden; oder
ein Führen der mindestens einen Leitung (102a, 102b) durch die mindestens eine Leitungsführungseinrichtung (18, 20).
